# EUROPÄISCHE PATENTSCHRIFT

(11) **EP 2 694 185 B1**
(45) Veröffentlichungstag und Bekanntmachung des Hinweises auf die Patenterteilung: **19.11.2014**
(21) Anmeldenummer: 12715807.9
(22) Anmeldetag: 04.04.2012
(51) Int. Cl.: B01D 46/00, B01D 46/24

(54) **SCHLAUCHFILTER ZUR REINIGUNG STAUBBELASTETER GASE UND INJEKTORDÜSE FÜR EINEN SOLCHEN SCHLAUCHFILTER**
BAG FILTER FOR CLEANING DUST-LADEN GASES AND INJECTOR NOZZLE FOR SUCH A BAG FILTER
FILTRE À MANCHES POUR L'ÉPURATION DE GAZ CHARGÉS DE POUSSIÈRES ET BUSE D'INJECTION POUR UN TEL FILTRE À MANCHES

(30) Priorität: 04.04.2011 AT 4722011
(43) Veröffentlichungstag der Anmeldung: 12.02.2014
(73) Patentinhaber: Scheuch GmbH, 4971 Aurolzmünster (AT)
(72) Erfinder: SCHWARZL, Günter, A-4910 Ried im Innkreis (AT); LISBERGER, Manfred, A-4752 Riedau (AT); DAXDOBLER, Jürgen, A-4920 Schildorn (AT); HELML, Josef, A-4980 Reichersberg (AT)
(74) Vertreter: Sonn & Partner Patentanwälte
(86) Internationale Anmeldenummer: PCT/AT2012/000091
(87) Internationale Veröffentlichungsnummer: WO 2012/135881

(56) Entgegenhaltungen:
- DE-U1- 20 000 648
- FR-A1- 2 218 922
- GB-A- 1 016 556

## Beschreibung

Die Erfindung betrifft ein Schlauchfilter zur Reinigung staubbelasteter Gase mit einem Gehäuse, welches durch einen Schlauchboden mit Öffnungen in eine Reingasseite und eine Rohgasseite unterteilt ist, in welchem Gehäuse mehrere Filterschläuche mit flachem Querschnitt und mit jeweils einem geschlossenen Ende und einem offenen Ende in den Öffnungen des Schlauchbodens angeordnet sind, welche Filterschläuche von außen mit den staubbelasteten Gasen beaufschlagbar sind und die gereinigten Gase über die offenen Enden abführbar sind, mit Einrichtungen zur Abgabe von Druckluftimpulsen in die offenen Enden der Filterschläuche zur Abreinigung der Filterschläuche, wobei in den Filterschläuchen jeweils Stützkörbe angeordnet sind.

Die Erfindung betrifft weiters eine Injektordüse für die Filterschläuche eines solchen Schlauchfilters, welche zumindest teilweise in die Öffnung des Schlauchbodens ragt.

Schlauchfilter werden zur Abscheidung fester Stoffe, wie z.B. Späne, Staube oder dgl. aus der Luft bzw. Rauchgasen verwendet. Beispiele für Einsatzgebiete sind die Holzverarbeitende Industrie, Metallindustrie, Steine-Erde-Industrie sowie die Reinigung von Rauchgasen. Staubfilter umfassen üblicherweise ein Gehäuse, welches durch einen sogenannten Schlauchboden mit Öffnungen in einer Reingasseite und einer Rohgasseite unterteilt ist. In den Öffnungen des Schlauchbodens werden die Filterschläuche in senkrechter oder horizontaler Ausrichtung angeordnet und entsprechend abgedichtet, so dass kein staubbelastetes Gas von der Rohgasseite ungefiltert in die Reingasseite gelangen kann.

Beispielsweise beschreibt die AT 377 711 B, die DE 200 00 648 U1 und die EP 848 980 B1 derartige Schlauchfilter. Üblicherweise haben die Filterschläuche einen kreisförmigen Querschnitt und weisen am offenen Ende einen Schnappring auf, mit dem die Fielterschläuche Werkzeuglos in den Öffnungen des Schlauchbodens angeordnet werden kann. Die Abdichtung der Filterschläuche gegenüber der Öffnung im Schlauchboden erfolgt dabei meist ohne zusätzliche Vorrichtungen, abgesehen von möglichen Halteelementen, welche das obere offene Filterschlauchende in der Öffnung des Schlauchbodens halten.

Filterschläuche mit rundem Querschnitt haben allerdings den Nachteil, dass das Verhältnis von Filterfläche, d.h. der äußeren Oberfläche des Filterschlauchs zum Innenvolumen, relative ungünstig ist. Daher werden auch Filterschläuche mit flachem Querschnitt, beispielsweise langlochförmigen Querschnitt oder ovalen Querschnitt, angeboten, bei welchem das Verhältnis von Filterfläche zum Innenvolumen günstiger als bei Filterschläuchen mit kreisrundem Querschnitt ist. Nachteile der Schlauchfilter mit Filterschläuchen flachen Querschnitts sind jedoch die schlechtere Abreinigungswirkung durch den flachen Querschnitt und dadurch bedingte schlechtere Filtrationsfunktion sowie die aufwendigere und schwierigere Montage der Schläuche und notwendige Abdichtung der Filterschläuche mit Hilfe von Klemm- oder Spanneinrichtungen. Bei einem Filterschlauch mit flachem, beispielsweise langlochförmigen Querschnitt, ist es nicht möglich, eine ausreichende Dichtung gegenüber der Öffnung im Schlauchboden ohne zusätzliche Hilfsmaßnahmen zu erzielen, da sonst im Längsbereich des Filterschlauchs Undichtheiten entstehen. Bei bekannten Schlauchfiltern mit Filterschläuchen mit flachem Querschnitt erfolgt die Abdichtung gegenüber der Öffnung des Schlauchbodens mit Konstruktionen, die das obere Ende der Filterschläuche gegen den Schlauchboden pressen und somit eine entsprechende Dichtwirkung erzielen. Durch den notwendigen Schritt der Abdichtung ist die Montage derartiger Schlauchfilter jedoch sehr aufwendig und kostenintensiv.

Darüber hinaus ist bei Schlauchfiltern mit Filterschläuchen mit flachem Querschnitt eine parallele Ausrichtung der Filterschläuche zueinander nur mit Hilfsmitteln, wie entsprechenden Schlauchführungen, möglich.

Beispielsweise beschreibt die GB 1 016 556 A ein Schlauchfilter, welches mehrere Filterschläuche mit flachem Querschnitt aufweist, in denen Stützkörbe angeordnet sind. Die Filterschläuche dieses Schlauchfilters weisen zwei offene Enden auf, wobei die Abreinigungsvorrichtung gegenüberliegend der Reingasseite angeordnet ist.

Die FR 2 218 922 A1 offenbart ein gattungsgemäßes Schlauchfilter mit Filterschläuchen mit jeweils einem offenen und einem geschlossenen Ende. Zudem ist eine Injektordüse vorgesehen, welche oberhalb eines Schlauchbodens angeordnet ist.

Aufgrund der existierenden Nachteile von derartigen Schlauchfiltern mit Filterschläuchen mit flachem Querschnitt ist deren Einsatz noch relativ stark begrenzt. Würde es gelingen, die Nachteile zu beseitigen bzw. zumindest zu reduzieren, könnte mit Schlauchfiltern mit Filterschläuchen mit flachem Querschnitt mit entsprechend reduziertem Volumen gegenüber Schlauchfiltern mit Filterschläuchen mit runden Querschnitt dieselbe Reinigungswirkung erzielt werden bzw. mit Filteranlagen gleicher Baugröße ein höherer Luftdurchsatz erzielt werden.

Die Aufgabe der vorliegenden Erfindung besteht daher in der Schaffung eines oben genannten Schlauchfilters, bei welchem die Filterschläuche, Stützkörbe und Injektordüse möglichst rasch und einfach montiert und demontiert werden können und eine zuverlässige Abdichtung ohne aufwendige konstruktive Hilfsmittel zum Schlauchboden erzielt werden kann und die Funktion des Schlauchfilters verbessert werden kann und möglichst kostengünstig hergestellt werden kann. Die Nachteile bekannter Schlauchfilter mit Filterschläuchen mit flachem Querschnitt sollen vermieden oder zumindest reduziert werden.

Eine weitere Aufgabe der vorliegenden Erfindung besteht in der Schaffung einer Injektordüse für ein obengenanntes Schlauchfilter, durch welches die Montage und Demontage erleichtert werden kann und mit dem eine optimale Reinigungswirkung erzielt werden kann.

Gelöst wird die erste erfindungsgemäße Aufgabe durch ein obengenanntes Schlauchfilter, bei dem jeder Stützkorb an dem den offenen Ende des jeweiligen Filterschlauchs zugeordneten Ende mit einer Injektordüse zur Leitung und Beschleunigung der Abreinigungsdruckluftimpulse verbunden ist, welche Injektordüse zumindest in die Öffnung des Schlauchbodens ragt, und an der Außenseite der Injektordüse in der Höhe des Schlauchbodens Abdichtelemente zur Bildung eines definierten Spalts für eine definierte Kompression des Filterschlauchs zwischen den Abdichtelementen und der Mantelfläche der Öffnung im Schlauchboden und somit eine selbsttätige Abdichtung des Filterschlauchs gegenüber der Öffnung des Schlauchbodens angeordnet sind, so dass der Filterschlauch an der Längsseite durch die Abdichtelemente an der Außenseite der Injektordüse gegen die Mantelfläche der Öffnung im Schlauchboden pressbar ist. Die erfindungsgemäße Konstruktion des Schlauchfilters bewirkt somit durch die entsprechend gestaltete Injektordüse einerseits eine leichtere und raschere Montage der Filterschläuche im Gehäuse des Schlauchfilters und anderseits eine automatische Abdichtung des Filterschlauchendes gegenüber der Öffnung des Schlauchbodens, ohne dass zusätzliche Konstruktionen und Maßnahmen erforderlich sind. Die Abdichtung des Filterschlauchs gegenüber dem Schlauchboden erfolgt automatisch und ausschließlich durch das Einsetzen der Injektordüse in das offene Ende des Filterschlauchs. Die Injektordüse verbessert darüber hinaus die Abreinigung des Filterschlauchs.

Gemäß einem weiteren Merkmal der Erfindung ist jede Injektordüse durch eine gegen die Einrichtungen zur Abgabe der Druckluftimpulse trichterförmig erweiternde Mündung gebildet. Durch die trichterförmig erweiternde Mündung der Injektordüse kann die von den Einrichtungen zur Abgabe von Druckluftimpulsen herrührende Druckluft im Wesentlichen vollständig in die offenen Filterschläuche geleitet und beschleunigt werden und somit die gesamte Energie der Druckluftimpulse zur Abreinigung eingesetzt werden. Durch die verbesserte Abreinigungswirkung wiederrum ist die Filterwirkung des Filterschlauchs verbessert.

Das Verhältnis der geringsten Breite der Injektordüse zur Breite der Mündung der Injektordüse beträgt vorzugsweise 1:2 bis 1:4, besonders vorzugsweise 1:2,5.

Im einfachsten Fall sind die Abdichtelemente durch zumindest eine Ausbuchtung an der Injektordüse gebildet, durch welche der Filterschlauch gegen die Mantelfläche der Öffnung im Schlauchboden pressbar ist. Die Injektordüse wird vorzugsweise aus Blech hergestellt und in der Höhe des Schlauchbodens mit den Ausbuchtungen durch entsprechende Prägewerkzeuge hergestellt werden. Die Ausbuchtungen drücken die flachen Filterschläuche zumindest an der Längsseite gegen die Mantelfäche der Öffnungen im Schlauchboden und bewirken somit eine optimale Abdichtung. Durch die Konstruktion wird gewährleistet, dass zwischen der Außenseite des Abdichtelements bzw. der Ausbuchtung an der Injektordüse und der Mantelfläche der Öffnung im Schlauchboden ein definierter Spalt resultiert, der so breit ist, dass das Material des Filterschlauchs in ausreichender Weise komprimiert wird, so dass eine absolute Dichtheit zwischen der Rohgasseite und Reingasseite des Schlauchfilters resultiert. Je nach Ausführung der Verbindung des oberen offenen Endes des Filterschlauchs mit der Öffnung im Schlauchboden können zumindest jeweils eine Ausbuchtung an jeder Längsseite der Injektordüse oder eine umlaufende Ausbuchtung an der Injektordüse angeordnet sein.

Vorteilhafterweise ist jeder Filterschlauch am offenen mit einem außenseitigen ringförmigen Wulst versehen, wobei der Außendurchmesser des ringförmigen Wulsts größer als der Außendurchmesser der Öffnung im Schlauchboden ist, so dass der ringförmige Wulst des Filterschlauchs am Schlauchboden aufliegt. Bei einer derartigen Ausführungsform der Filterschläuche kann eine Montage durch einfaches Einhängen des Filterschlauchs in die Öffnungen im Schlauchboden erfolgen. Danach werden die Stützkörbe eingesetzt und schließlich durch Anordnen der erfindungsgemäß ausgebildeten Injektordüsen eine Fixierung der Filterschläuche und eine Abdichtung erzielt. In diesem Fall ist es von Vorteil, wenn das Abdichtelement an der Injektordüse umlaufend angeordnet, so dass entlang der gesamten Öffnung im Schlauchböden ein definierter Spalt für eine definierte Kompression des Filterschlauchs resultiert. Eine Konstruktion zum Niederhalten der Filterschläuche ist zumindest bei einer vertikalen Anordnung der Filterschläuche im Schlauchfilter nicht erforderlich.

Ebenso kann jeder Filterschlauch am offenen Ende mit einem Federring und zwei außenseitigen ringförmigen Erhebungen versehen sein, zwischen welchen Erhebungen eine ringförmige Nut gebildet wird, über die mit der Öffnung im Schlauchboden eine Schnappverbindung herstellbar ist. Im Falle der Ausführung der Filterschläuche mit Schnappringen brauchen die Abdichtelemente an der Injektordüse nur an der Längsseite angeordnet sein, um eine ausreichende Abdichtung erzielen zu können.

Für die vertikale Anordnung der Filterschläuche im Schlauchfiler ist es von Vorteil, wenn an jeder Injektordüse Elemente zur Abstützung am Schlauchboden angeordnet sind. Durch derartige Abstützelemente bzw. Füße an der Injektordüse kann auch ohne zusätzlichen Schlauchführungen ein gerade Halten der Filterschläuche und somit eine parallele Anordnung der Filterschläuche zueinander erreicht werden, wenn eine entsprechende Verbindung zwischen der Injektordüse und dem Stützkorb vorgesehen ist bzw. diese einstückig hergestellt sind.

Bei einer horizontalen Ausrichtung der Filterschläuche im Schlauchfilter können Elemente zur Auflagen der Stützkörbe erforderlich sein. An derartigen Auflageelementen werden zumindest die Enden der Stützkörbe aufgelegt und dadurch eine parallele Anordnung sämtlicher Filterschläuche zueinander erzielt.

Für ein optimales Verhältnis von Filterfläche zu Innenvolumen der Filterschläuche weisen diese vorzugsweise einen Querschnitt mit einem Längen-Breiten-Verhältnis von mindestens 4:1 auf.

Die Einrichtungen zur Abgabe von Druckluftimpulsen sind vorzugsweise durch Treibstrahlrohre mit jeweils zwei nebeneinander angeordneten Öffnungen je Filterschlauch gebildet, wobei die Treibstrahlrohre mit einer entsprechenden Druckluftquelle verbunden sind. Durch eine derartige Anordnung von zumindest zwei nebeneinander angeordneten Öffnungen zur Abgabe von Druckluftimpulsen je Filterschlauch kann eine optimale Abreinigung der Filterschläuche mit flachem Querschnitt erzielt werden. Die zumindest zwei Öffnungen sind dabei entlang der Längsachse des Querschnitts des Filterschlauchs angeordnet.

Vorteilhafterweise ist jeder Stützkorb mit der Injektordüse werkzeuglos lösbar miteinander verbunden. Beispielsweise können Rastverbindungen vorgesehen sein, die den Stützkorb automatisch mit der Injektordüse verbinden, sobald die Injektordüse in das offene Ende des Filterschlauchs eingeschoben wird.

Alternativ dazu kann auch jeder Stützkorb mit der Injektordüse einstückig hergestellt sein. Insbesondere bei geringeren Stützkorblängen ist eine derartige Ausführungsform vorteilhaft, da mit einem Arbeitsschritt der Stützkorb in den Filterschlauch eingebracht und der Filterschlauch gegenüber der Öffnung im Schlauchboden abgedichtet werden kann.

Gelöst wird die zweite erfindungsgemäße Aufgabe auch durch eine obengenannte Injektordüse für die Filterschläuche eines obengenannten Schlauchfilters, wobei an der Außenseite der Injektordüse in einer Höhe, die in der Betriebslage der Injektordüse der Höhe des Schlauchbodens entspricht Abdichtelemente zur Bildung eines definierten Spalts für eine definierte Kompression des Filterschlauchs zwischen den Abdichtelementen und der Mantelfläche der Öffnung im Schlauchboden und somit eine selbsttätige Abdichtung des Filterschlauchs gegenüber der Öffnung des Schlauchbodens angeordnet sind. Wie bereits oben erwähnt, kann durch eine derartige Injektordüse die Dicht- und Injektorfunktion vereint werden. Sollte die Injektordüse gleich einstückig mit dem Stützkorb hergestellt worden sein, wird damit zusätzlich auch noch die Stützfunktion erzielt.

Bezüglich der erfindungsgemäßen Ausbildungsformen der Injektordüse wird auf die obige Beschreibung des Schlauchfilters verwiesen.

Die vorliegende Erfindung wird anhand der beigefügten Zeichnungen näher erläutert.

Darin zeigen
Fig. 1 einen Querschnitt eines Schlauchfilters in schematischer Darstellung;
Fig. 2 einen Querschnitt durch eine erfindungsgemäß augebildete Injektordüse zur Befestigung eines mit einem Schnappring ausgebildeten Filterschlauchs;
Fig. 3 eine geänderte Ausführungsform einer Injektordüse zur Befestigung eines mit einem ringförmigen Wulsts versehenen Endes eines Filterschlauchs;
Fig. 4 eine perspektivische Ansicht auf eine Variante einer Injektordüse;
Fig. 5 eine aus 4 Teilen zusammengebaute Injektordüse gemäß Fig. 4; und
Fig. 6 eine einstückig mit einem Stützkorb hergestellte Injektordüse in perspektivischer Ansicht.

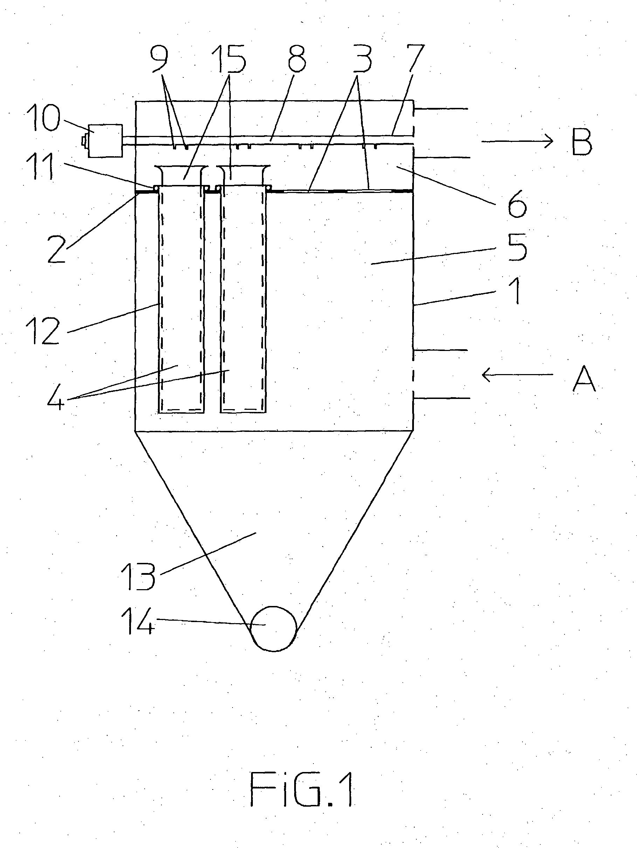

Fig. 1 zeigt einen Querschnitt eine durch einen Schlauchfilter bekannte Bauart. In einem Gehäuse 1 befindet sich ein Schlaüchboden 2 mit Öffnungen 3, in die entsprechende Filterschläuche 4 angeordnet bzw. eingehängt werden. Die staubbelasteten Gase A werden in die Rohgasseite 5 des Schlauchfilters eingebracht. Die Filterschläuche 4 weisen ein offenes oberes Ende und ein geschlossenes unteres Ende auf. Die staubbelasteten Gase A durchströmen das Material der Filterschläuche 4 und gelangen über die Öffnungen 3 im Schlauchboden 2 in die Reingasseite 6 des Schlauchfilters. Von dort werden die Reingase B entsprechend abgeleitet. In der Reingasseite 6 des Schlauchfilters sind Einrichtungen 7 zur Abgabe von Druckluftimpulsen in die offenen Ende der Filterschläuche 4 zur Abreinigung der Filterschläuche angeordnet. Diese Einrichtungen 7 zur Abgabe von Druckluftimpulsen können beispielsweise durch entsprechend gestaltete Treibstrahlrohre 8 mit Öffnungen 9 oberhalb jedes Filterschlauchs 4 und eine entsprechende mit dem Treibstrahlrohren 8 verbundene Druckluftquelle 10 gebildet sein. In regelmäßigen oder entsprechend der Verunreinigung der Filterschläuche 4 geregelten Zeitabständen werden über die Öffnungen 9 der Treibstrahlrohre 8 Druckluftimpulse in die Filterschläuche 4 eingeblasen und der an der Außenseite der Filterschläuche 4 anhaftende Staub abgereinigt. Um zu verhindern, dass die Filterschläuche 4 aus textilem Material kollabieren, sind im Inneren der Filterschläuche 4 Stützkörbe 12 zur Stabilisation angeordnet. Der beim Abreinigen der Filterschläuche 4 abgeschiedene Filterkuchen wird über einen Sammeltrichter 13 und allenfalls ein Austragsorgan 14 ausgetragen. Zur Erzielung einer Abdichtung der Filterschläuche 4 gegenüber den Öffnungen 3 im Schlauchboden 2 sind entsprechende Abdichteinrichtungen 11 notwendig. Insbesondere bei Filterschläuchen 4 mit flachem Querschnitt ist eine derartige Abdichtung nur mit entsprechendem Aufwand erzielbar.

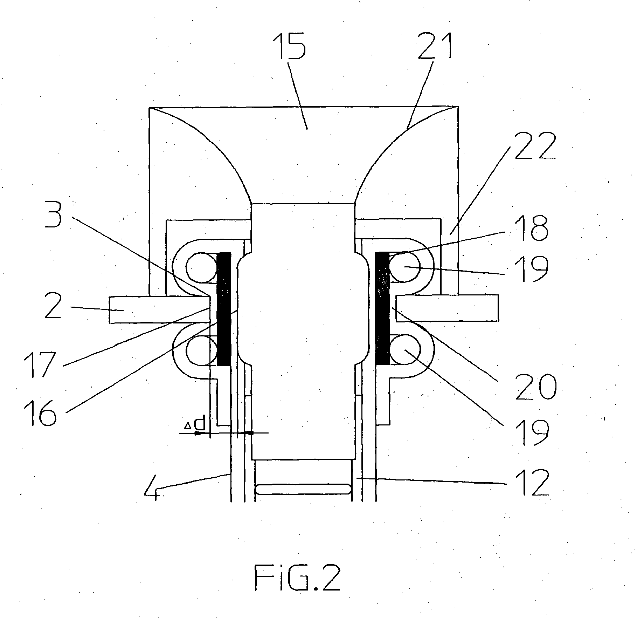

Fig. 2 zeigt eine Ausführungsform der vorliegenden Erfindung, wobei eine Injektordüse 15 vorgesehen ist, welche einerseits zur Leitung und Beschleunigung der von der Einrichtung 7 zur Abgabe von Druckluftimpulsen herrührenden Druckluftimpulse dient, und andererseits den Filterschlauch 4 gegenüber der Öffnung 3 im Schlauchboden 2 abdichtet. Zu diesem Zweck weist die Injektordüse 15 an der Außenseite in der Höhe des Schlauchbodens 2 Abdichtelemente 16 zur Bildung eines definierten Spalts Δd für eine definierte Kompression des Filterschlauchs 4 zwischen den Abdichtelementen 16 und der Mantelfläche 17 der Öffnung 3 im Schlauchboden 2 und somit eine selbsttätige Abdichtung des Filterschlauchs 4 gegenüber der Öffnung 3 des Schlauchbodens 2 auf. Im dargestellten Ausführungsbeispiel gemäß Fig. 2 ist der Filterschlauch 4 am offenen Ende mit einem Federring 18 mit zwei außenseitigen ringförmigen Erhebungen 19 versehen, zwischen welchen Erhebungen 19 eine ringförmige Nut 20 gebildet wird, über die mit der Öffnung 3 im Schlauchboden 2 eine Schnappverbindung herstellbar ist. Durch die Abdichtelemente 16 an der Außenseite der Injektordüse 15 wird somit der Filterschlauch 4 an der Längsseite gegen die Mantelfäche 17 der Öffnung 3 im Schlaüchboden 2 gepresst und eine entsprechende Abdichtung ohne zusätzliche Maßnahmen erzielt. Die Injektordüse 15 weist vorzugsweise eine gegen die Einrichtungen 7 zur Abgabe von Druckluftimpulsen in trichterförmig erweiternde Mündung 21 auf. Das Verhältnis der geringsten Breite der Injektordüse 15 zur Breite der Mündung 21 kann 1:2 bis 1:4, vorzugsweise 1: 2,5, betragen. Insbesondere bei einer vertikalen Anordnung der Filterschläuche 4 kann es von Vorteil sein, wenn an der Injektordüse 15 Elemente 22 zur Abstützung am Schlauchboden 2 angeordnet sind. Durch diese wird auch eine gerade Ausrichtung der Filterschläuche 4 bzw. darin angeordneten Stützkörbe 12, ohne zusätzliche Schlauchführungen, erzielt.

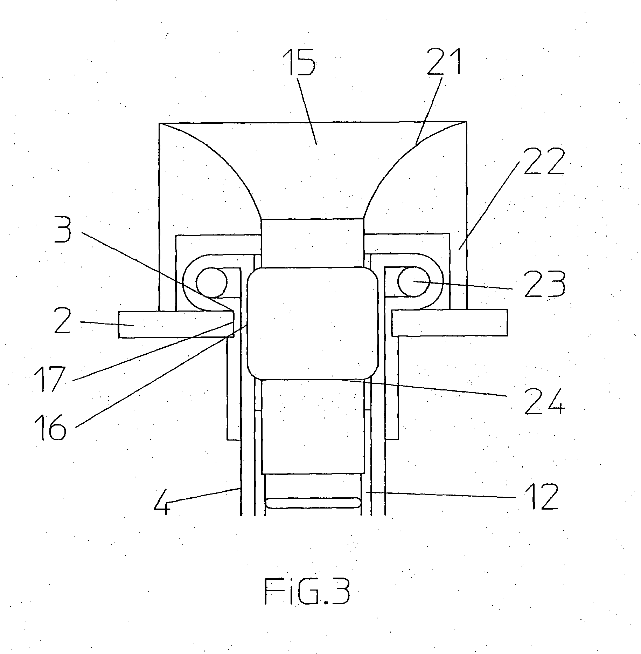

Fig. 3 zeigt eine gegenüber Fig. 2 abgewandelte Form eines Schlauchfilters, wobei das obere offene Ende des Filterschlauchs 4 einen außenseitigen ringförmigen Wulst 23 aufweist, welcher am Schlauchboden 2 aufliegt. Um eine Abdichtung des Filterschlauchs 4 gegenüber der Öffnung 3 im Schlauchboden 2 erzielen zu können, ist in diesem Fall vorzugsweise ein Abdichtelement 16 an der Injketordüse 15 vorgesehen, das durch eine umlaufende Ausbuchtung 24 gebildet ist. Diese Ausführungsvariante eignet sich insbesondere für vertikal angeordnete Filterschläuche 4.

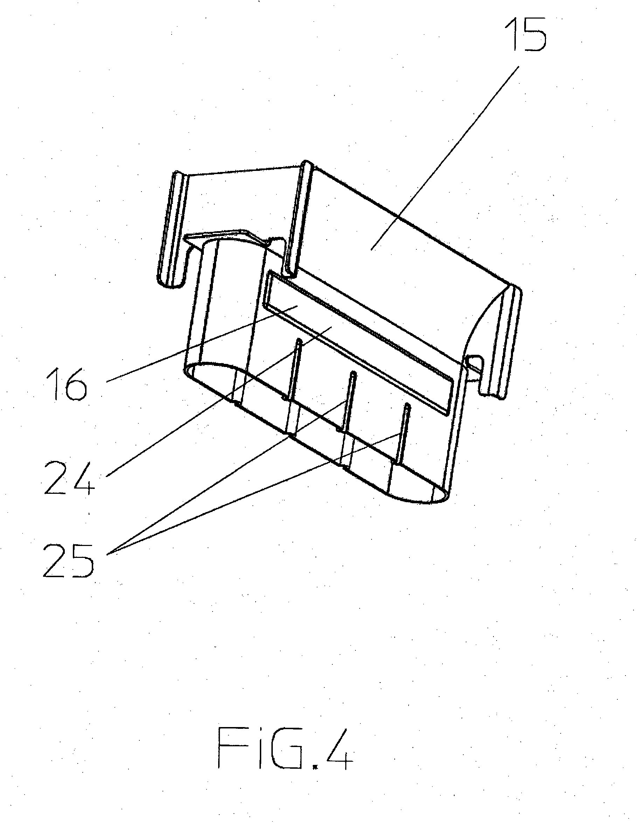

Fig. 4 zeigt eine perspektivische Ansicht auf eine Injektordüse 15, wobei das Abdichtelement 16 in Form einer Ausbuchtung 24 an der Längsseite deutlich ersichtlich ist. Die Injektordüse 15 weist auch entsprechende Elemente 25 zur vorzugsweise werkzeuglosen lösbaren Verbindung mit einem Stützkorb 12 auf, die beispielsweise durch Öffnungen, in die Elemente des Stützkorbes 12 einrasten, gebildet sein können.

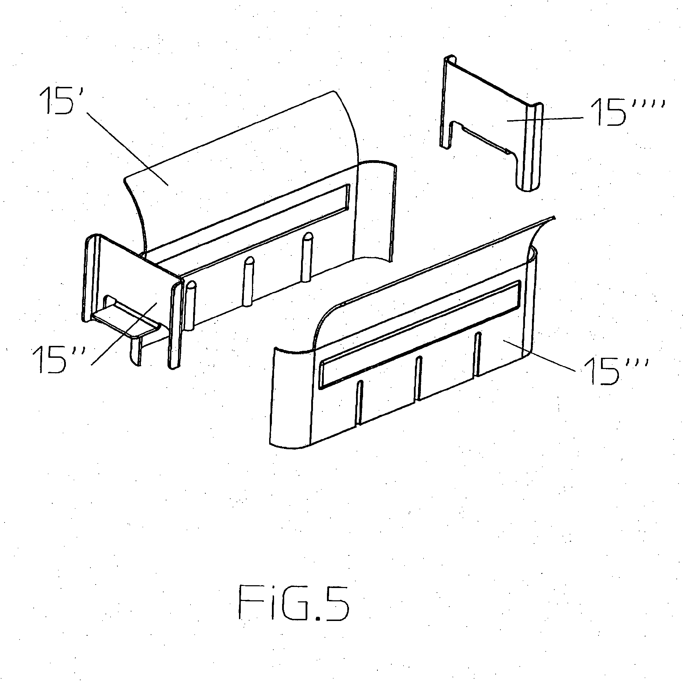

Fig. 5 zeigt eine mögliche Zusammenstellung einer Injektordüse 15 aus vier Blechteilen 15', 15", 15'" und 15"", wobei jeweils zwei Teile 15', 15'" und 15", 15"" identisch ausgebildet sind. Auf diese Weise kann die Injektordüse 15 sehr rasch und kostengünstig hergestellt werden. Ebenso ist es möglich, die Injektordüse 15 aus einem Bleichteil durch Biegen und Verbinden, beispielsweise durch ein Schweißverfahren, herzustellen.

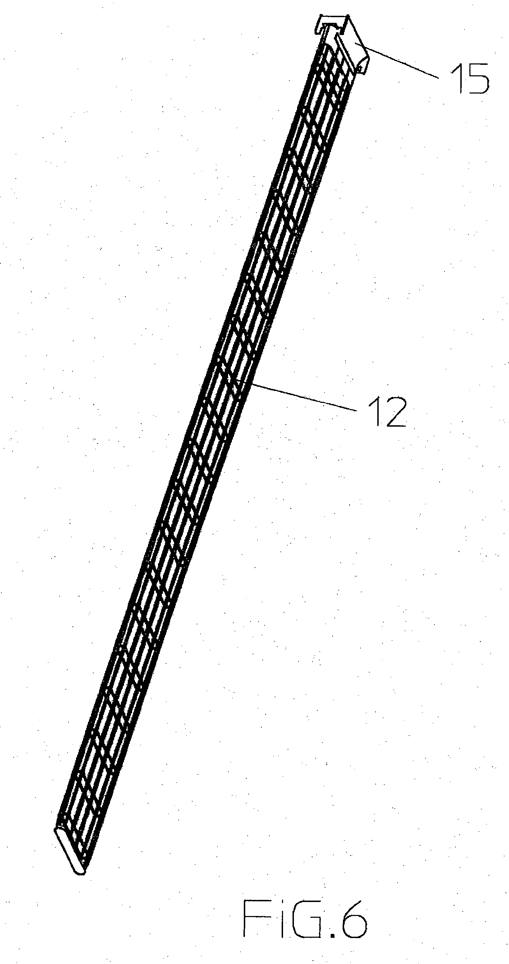

Fig. 6 zeigt eine Aüsführungsform bei der die Injektordüse 15 und der Stützkorb 12 einstückig hergestellt sind. Diese Konstruktionsvariante ermöglicht eine besonders rasche Montage der Filterschläuche 4 im Schlauchfilter unter gleichzeitiger automatischer Abdichtung der Filterschläuche 4 gegenüber den Öffnungen 3 im Schlauchboden 2 des Schlauchfilters. Eine derartig ausgebildete Injektordüse 15 mit integriertem Stützkorb 12 vereint die Stützfunktion, Dichtfunktion und Injektorfunktion des Schlauchfilters.

Auf diese Weise ist eine Anwendung eines Schlauchfilters mit Filterschläuchen 4 mit flachem Querschnitt ohne die Nachteile des Standes der Technik möglich. Durch Wegfall der Nachteile von Schlauchfiltern mit Filterschläuchen 4 mit flachem Querschnitt können somit kleinere Filtersysteme gegenüber Schlauchfiltern mit Filterschläuchen mit rundem Querschnitt bei gleicher Reinigungswirkung eingesetzt werden

## Patentansprüche

1. Schlauchfilter zur Reinigung staubbelasteter Gase (A), mit einem Gehäuse (1), welches durch einen Schlauchboden (2) mit Öffnungen (3) in eine Reingasseite (6) und eine Rohgasseite (5) unterteilt ist, in welchem Gehäuse (1) mehrere Filterschläuche (4) mit flachem Querschnitt und mit jeweils einem geschlossenen Ende und einem offenen Ende in den Öffnungen (3) des Schlauchbodens (2) angeordnet sind, welche Filterschläuche (4) von außen mit den staubbelasteten Gasen (A) beaufschlagbar sind und die gereinigten Gase über die offenen Enden abführbar sind, mit Einrichtungen (7) zur Abgabe von Druckluftimpulsen in die offenen Enden der Filterschläuche (4) zur Abreinigung der Filterschläuche (4), wobei in den Filterschläuchen (4) jeweils Stützkörbe (12) angeordnet sind, **dadurch gekennzeichnet, dass** jeder Stützkorb (12) an dem, dem offenen Ende des jeweiligen Filterschlauchs (4) zugeordneten Ende mit einer Injektordüse (15) zur Leitung und Beschleunigung der Abreinigungs-Druckluftimpulse verbunden ist, welche Injektordüse (15) zumindest teilweise in die Öffnung (3) des Schlauchbodens (2) ragt, und an der Außenseite der Injektordüse (15) in der Höhe des Schlauchbodens (2) Abdichtelemente (16) zur Bildung eines definierten Spalts (Δd) für eine definierte Kompression des Filterschlauchs (4) zwischen den Abdichtelementen (16) und der Mantelfläche (17) der Öffnung (3) im Schlauchboden (2) und somit eine selbsttätige Abdichtung des Filterschlauchs (4) gegenüber der Öffnung (3) des Schlauchbodens (2) angeordnet sind, so dass der Filterschlauch (4) an der Längsseite durch die Abdichtelemente (16) an der Außenseite der Injektordüse (15) gegen die Mantelfläche (17) der Öffnung (3) im Schlauchboden (2) pressbar ist.

2. Schlauchfilter nach Anspruch 1, **dadurch gekennzeichnet, dass** jede Injektordüse (15) durch eine gegen die Einrichtungen (7) zur Abgabe der Druckluftimpulse trichterförmig erweiternde Mündung (21) gebildet ist.

3. Schlauchfilter nach Anspruch 2, **dadurch gekennzeichnet, dass** das Verhältnis der geringsten Breite der Injektordüse (15) zur Breite der Mündung (21) der Injektordüse (15) 1:2 bis 1:4, vorzugsweise 1:2,5 beträgt.

4. Schlauchfilter nach einem der Ansprüche 1 bis 3, **dadurch gekennzeichnet, dass** die Abdichtelemente (16) durch zumindest eine Ausbuchtung (24) an der Injektordüse (15) gebildet sind, durch welche der Filterschlauch (4) gegen die Mantelfläche (17) der Öffnung (3) im Schlauchboden (2) pressbar ist.

5. Schlauchfilter nach einem der Ansprüche 1 bis 4, **dadurch gekennzeichnet, dass** jeder Filterschlauch (4) am offenen Ende mit einem außenseitigen ringförmigen Wulst (23)versehen ist, welcher ringförmige Wulst (23) am Schlauchboden (2) aufliegt.

6. Schlauchfilter nach einem der Ansprüche 1 bis 4, **dadurch gekennzeichnet, dass** jeder Filterschlauch (4) am offenen Ende mit einem Federring (18) und zwei außenseitigen ringförmigen Erhebungen (19) versehen ist, zwischen welchen Erhebungen (19) eine ringförmige Nut (20) gebildet wird, über die mit der Öffnung (3) im Schlauchboden (2) eine Schnappverbindung herstellbar ist.

7. Schlauchfilter nach einem der Ansprüche 1 bis 6, **dadurch gekennzeichnet, dass** an jeder Injektordüse (15) Elemente (22) zur Abstützung am Schlauchboden (2) angeordnet sind.

8. Schlauchfilter nach einem der Ansprüche 1 bis 7, **dadurch gekennzeichnet, dass** Elemente (22) zur Auflage der Stützkörbe (12) vorgesehen sind.

9. Schlauchfilter nach einem der Ansprüche 1 bis 8, **dadurch gekennzeichnet, dass** die Filterschläuche (4) einen Querschnitt mit einem Längen/Breitenverhältnis von mindestens 4:1 aufweisen.

10. Schlauchfilter nach einem der Ansprüche 1 bis 9, **dadurch gekennzeichnet, dass** die Einrichtungen (7) zur Abgabe von Druckluftimpulsen durch Treibstrahlrohre (8) mit jeweils zwei nebeneinander angeordneten Öffnungen (9) je Filterschlauch (4) gebildet sind, welche Treibstrahlrohre (8) mit einer Druckluftquelle (10) verbunden sind.

11. Schlauchfilter nach einem der Ansprüche 1 bis 10, **dadurch gekennzeichnet, dass** jeder Stützkorb (12) mit der Injektordüse (15) werkzeuglos lösbar miteinander verbunden ist.

12. Schlauchfilter nach einem der Ansprüche 1 bis 10, **dadurch gekennzeichnet, dass** jeder Stützkorb (12) mit der Injektordüse (15) einstückig hergestellt ist.

13. Injektordüse (15) für (4) einen Schlauchfilter (1) nach einem der Ansprüche 1 bis 12, welche zumindest teilweise in die Öffnung (3) des Schlauchbodens (2) ragt, **dadurch gekennzeichnet, dass** an der Außenseite in der Betriebslage in Höhe des Schlauchbodens (2) Abdichtelemente (16) zur Bildung eines definierten Spalts (Δd) für eine definierte Kompression des Filterschlauchs (4) zwischen den Abdichtelementen (16) und der Mantelfläche (17) der Öffnung (3) im Schlauchboden (2) und somit eine selbsttätige Abdichtung des Filterschlauchs (4) gegenüber der Öffnung (3) des Schlauchbodens (2) angeordnet sind.

14. Injektordüse (15) nach Anspruch 13, **dadurch gekennzeichnet, dass** eine gegen die Einrichtungen (7) zur Abgabe der Druckluftimpulse trichterförmig erweiternde Mündung (21) vorgesehen ist.

15. Injektordüse (15) nach Anspruch 14, **dadurch gekennzeichnet, dass** das Verhältnis der geringsten Breite der Injektordüse (15) zur Breite der Mündung (21) der Injektordüse (15) 1:2 bis 1:4, vorzugsweise 1:2,5 beträgt.

16. Injektordüse (15) nach einem der Ansprüche 13 bis 15, **dadurch gekennzeichnet, dass** die Abdichtelemente (16) durch zumindest eine Ausbuchtung (24) an der Injektordüse (15) gebildet sind, durch welche der Filterschlauch (4) gegen die Mantelfläche (17) der Öffnung (3) im Schlauchboden (2) pressbar ist.

17. Injektordüse (15) nach einem der Ansprüche 13 bis 16, **dadurch gekennzeichnet, dass** Elemente (22) zur Abstützung am Schlauchboden (2) angeordnet sind.

18. Injektordüse (15) nach einem der Ansprüche 13 bis 17, **dadurch gekennzeichnet, dass** Elemente zur werkzeuglosen lösbaren Verbindung mit einem Stützkorb (12) vorgesehen sind.

## Claims

1. A bag filter for cleaning dust-laden gases (A), comprising a housing (1), which is divided into a filtered-gas side (6) and an unfiltered-gas side (5) by a bag bottom (2) having openings (3), in which housing (1) several filter bags (4) having a flat cross-section and a closed end and an open end are arranged in the openings (3) of the bag bottom (2), wherein the dust-laden gases (A) may be applied to said filter bags (4) from the outside and the cleaned gases may be discharged through the open ends, having elements (7) for the output of compressed-air pulses into the open ends of the filter bags (4) for dedusting the filter bags (4), with support baskets (12) being arranged in each filter bag (4), **characterised in that** each support basket (12) is connected at the end associated with the open end of the respective filter bag (4) to an injector nozzle (15) for conducting and accelerating the dedusting compressed-air pulses, which injector nozzle (15) protrudes at least partially into the opening (3) of the bag bottom (2), and sealing elements (16) are arranged on the outside of the injector nozzle (15) at the height of the bag bottom (2) in order to form a defined gap (Δd) for a defined compression of the filter bag (4) between the sealing elements (16) and the jacket surface (17) of the opening (3) in the bag bottom (2) and thus to independently seal the filter bag (4) with respect to the opening (3) of the bag bottom (2) so that, on the longitudinal side, the filter bag (4) may be pressed against the jacket surface (17) of the opening (3) in the bag bottom (2) by means of the sealing elements (16) on the outside of the injector nozzle (15).

2. The bag filter according to claim 1, **characterised in that** each injector nozzle (15) is formed by a funnel-shaped mouth (21) expanding towards the elements (7) for the output of compressed-air pulses.

3. The bag filter according to claim 2, **characterised in that** the ratio between the smallest width of the injector nozzle (15) and the width of the mouth (21) of the injector nozzle (15) is 1:2 to 1:4, preferably 1:2.5.

4. The bag filter according to any one of claims 1 to 3, **characterised in that** the sealing elements (16) are formed by at least one bulge (24) on the injector nozzle (15) by which the filter bag (4) may be pressed against the jacket surface (17) of the opening (3) in the bag bottom (2).

5. The bag filter according to any one of claims 1 to 4, **characterised in that** each filter bag (4) is provided with a ring-shaped ridge (23) on the outside at the open end, which ring-shaped ridge (23) rests on the bag bottom (2).

6. The bag filter according to any one of claims 1 to 4, **characterised in that** the open end of each filter bag (4) is provided with a spring ring (18) and two ring-shaped elevations (19) on the outside, between which elevations (19) a ring-shaped groove (20) is formed for creating a snap fit with the opening (3) in the bag bottom (2).

7. The bag filter according to any one of claims 1 to 6, **characterised in that** elements (22) for resting against the bag bottom (2) are arranged on each injector nozzle (15).

8. The bag filter according to any one of claims 1 to 7, **characterised in that** elements (22) for the support baskets (12) to rest on are provided.

9. The bag filter according to any one of claims 1 to 8, **characterised in that** the filter bags (4) have a cross-section with a length/width ratio of at least 4:1.

10. The bag filter according to any one of claims 1 to 9, **characterised in that** the elements (7) for the output of compressed-air pulses are formed by blowing jet pipes (8), each having two openings (9) arranged adjacent to each other per filter bag (4), which blowing jet pipes (8) are connected to a compressed air source (10).

11. The bag filter according to any one of claims 1 to 10, **characterised in that** each support basket (12) is connected to the injector nozzle (15) releasably without the use of tools.

12. The bag filter according to any one of claims 1 to 10, **characterised in that** each support basket (12) is formed integrally with the injector nozzle (15).

13. An injector nozzle (15) for a bag filter (1) according to any one of claims 1 to 12, which protrudes at least partially into the opening (3) of the bag bottom (2), **characterised in that** on the outside, in the operating position at the height of the bag bottom (2), sealing elements (16) are arranged in order to form a defined gap (Δd) for a defined compression of the filter bag (4) between the sealing elements (16) and the jacket surface (17) of the opening (3) in the bag bottom (2) and thus to independently seal the filter bag (4) with respect to the opening (3) of the bag bottom (2).

14. The injector nozzle (15) according to claim 13, **characterised in that** a funnel-shaped mouth (21) expanding towards the elements (7) for the output of compressed-air pulses is provided.

15. The injector nozzle (15) according to claim 14, **characterised in that** the ratio between the smallest width of the injector nozzle (15) and the width of the mouth (21) of the injector nozzle (15) is 1:2 to 1:4, preferably 1:2.5.

16. The injector nozzle (15) according to any one of claims 13 to 15, **characterised in that** the sealing elements (16) are formed by at least one bulge (24) on the injector nozzle (15) by which the filter bag (4) may be pressed against the jacket surface (17) of the opening (3) in the bag bottom (2).

17. The injector nozzle (15) according to any one of claims 13 to 16, **characterised in that** elements (22) for resting against the bag bottom (2) are arranged.

18. The injector nozzle (15) according to any one of claims 13 to 17, **characterised in that** elements for the connection to a support basket (12) releasably without the use of tools are provided.

## Revendications

1. Filtre à manches pour le nettoyage de gaz contenant des poussières (A), avec un boîtier (1), qui est divisé par un fond de manche (2) avec des ouvertures (3) en un côté de gaz pur (6) et un côté de gaz brut (5), plusieurs manches de filtres (4) avec une section plate et une extrémité fermée étant disposées dans ce boîtier (1), dans les ouvertures (3) du fond de manche (2), ces manches filtrantes (4) pouvant être alimentées de l'extérieur avec les gaz contenant des poussières (A) et les gaz nettoyés pouvant être évacués par les extrémités ouvertes, avec des dispositifs (7) pour la distribution d'impulsions d'air comprimé dans les extrémités ouvertes des manches filtrantes (4) pour le nettoyage des manches filtrantes (4), des corbeilles d'appui (12) étant disposées dans les manches filtrantes (4), **caractérisé en ce que** chaque corbeille d'appui (12) est reliée, au niveau de l'extrémité correspondant à l'extrémité ouverte de la manche filtrante (4), à une buse d'injection (15) pour la conduite et l'accélération des impulsions d'air comprimé de nettoyage, cette buse d'injection (15) dépassant au moins partiellement dans l'ouverture (3) du fond de manche (2) et, du côté extérieur de la buse d'injection (15) à la hauteur du fond de manche (2), se trouvent des éléments d'étanchéité (16) pour la formation d'un interstice (Δd) défini pour une compression définie de la manche filtrante (4) entre les éléments d'étanchéité (16) et la surface externe (17) de l'ouverture (3) dans le fond de manche (2) et permettant donc une étanchéisation automatique de la manche filtrante (4) par rapport à l'ouverture (3) du fond de manche (2), de façon à ce que la manche filtrante (4) peut être poussée, sur le côté longitudinal par les éléments d'étanchéité (16), sur le côté extérieur de la buse d'injection (15) contre la surface externe (17) de l'ouverture (3) dans le fond de manche (2).

2. Filtre à manches selon la revendication 1, **caractérisé en ce que** chaque buse d'injection (15) est constituée d'une embouchure (21) s'évasant sous la forme d'un entonnoir contre les dispositifs (7) de distribution des impulsions d'air comprimé.

3. Filtre à manches selon la revendication 2, **caractérisé en ce que** le rapport entre la largeur la plus faible de la buse d'injection (15) et la largeur de l'embouchure (21) de la buse d'injection (15) est de 1:2 à 1:4, de préférence 1:2,5.

4. Filtre à manches selon l'une des revendications 1 à 3, **caractérisé en ce que** les éléments d'étanchéité (16) sont constitués d'au moins une protubérance (24) sur la buse d'injection (15), grâce à laquelle la manche filtrante (4) peut être poussée contre la surface externe (17) de l'ouverture (3) dans le fond de manche (2).

5. Filtre à manches selon l'une des revendications 1 à 4, **caractérisé en ce que** chaque manche filtrante (4) est munie, à l'extrémité ouverte, d'un bourrelet (23) annulaire externe, ce bourrelet (23) reposant sur le fond de manche (2).

6. Filtre à manches selon l'une des revendications 1 à 4, **caractérisé en ce que** chaque manche filtrante (4) est munie, à l'extrémité ouverte, d'une bague élastique (18) et de deux bossages annulaires externes (19) et, entre ces bossages (19) une rainure annulaire (20) est formée, grâce à laquelle une liaison par encliquetage peut être établie avec l'ouverture (3) dans le fond de manche (2).

7. Filtre à manches selon l'une des revendications 1 à 6, **caractérisé en ce que**, sur chaque buse d'injection (15), se trouvent des éléments (22) destinés à être appuyés contre le fond de manche (2).

8. Filtre à manches selon l'une des revendications 1 à 7, **caractérisé en ce que** des éléments (22) sont prévus pour l'appui de la corbeille d'appui (12).

9. Filtre à manches selon l'une des revendications 1 à 8, **caractérisé en ce que** les manches filtrantes (4) présentent une section avec un rapport longueur/largeur d'au moins 4:1.

10. Filtre à manches selon l'une des revendications 1 à 9, **caractérisé en ce que** les dispositifs (7) de distribution d'impulsions d'air comprimé sont constitués chacun de tuyaux d'éjection (8) avec deux ouvertures (9) juxtaposées par manche filtrante (4), ces tuyaux d'éjection (8) étant reliés à une source d'air comprimé (10).

11. Filtre à manches selon l'une des revendications 1 à 10, **caractérisé en ce que** chaque corbeille d'appui (12) est reliée à la buse d'injection (15) sans outil de manière amovible.

12. Filtre à manches selon l'une des revendications 1 à 10, **caractérisé en ce que** chaque corbeille d'appui (12) est formée d'une seule pièce avec la buse d'injection (15).

13. Buse d'injection (15) pour un filtre à manches (1) selon l'une des revendications 1 à 12, qui dépasse au moins partiellement dans l'ouverture (3) du fond de manche (2), **caractérisée en ce que**, sur le côté extérieur dans la position de fonctionnement, à la hauteur du fond de manche (2), se trouvent des éléments d'étanchéité (16) pour la formation d'un interstice (Δd) défini pour une compression définie de la manche filtrante (4) entre les éléments d'étanchéité (16) et la surface externe (17) de l'ouverture (3) dans le fond de manche (2) et permettant une étanchéisation automatique de la manche filtrante (4) par rapport à l'ouverture (3) du fond de manche (2).

14. Buse d'injection (15) selon la revendication 13, **caractérisée en ce qu'**une embouchure (21) s'évase en forme d'entonnoir contre les dispositifs (7) de distribution des impulsions d'air comprimé.

15. Buse d'injection (15) selon la revendication 14, **caractérisée en ce que** le rapport entre la largeur la plus faible de la buse d'injection (15) et la largeur de l'embouchure (21) de la buse d'injection (15) est de 1:2 à 1:4, de préférence de 1:2,5.

16. Buse d'injection (15) selon l'une des revendications 13 à 15, **caractérisée en ce que** les éléments d'étanchéité (16) sont constitués d'au moins une protubérance (24) sur la buse d'injection (15), grâce à laquelle la manche filtrante (4) peut être poussée contre la surface externe (17) de l'ouverture (3) dans le fond de manche (2).

17. Buse d'injection (15) selon l'une des revendications 13 à 16, **caractérisée en ce que** des éléments (22) sont prévus pour l'appui contre le fond de manche (2).

18. Buse d'injection (15) selon l'une des revendications 13 à 17, **caractérisée en ce que** des éléments sont prévus pour la liaison amovible sans outil avec un panier de support (12).
